# EUROPÄISCHE PATENTANMELDUNG

(11) **EP 3 725 914 A1**
(43) Veröffentlichungstag der Anmeldung: **21.10.2020**
(21) Anmeldenummer: 19170132.5
(22) Anmeldetag: 18.04.2019
(51) Int. Cl.: C25B 1/00, C25B 3/04, C25B 9/08, C25B 11/03, C25B 11/04

(54) **VERFAHREN UND VORRICHTUNG ZUR ELEKTROCHEMISCHEN NUTZUNG VON KOHLENSTOFFDIOXID**

(71) Anmelder: Siemens Aktiengesellschaft, 80333 München (DE)
(72) Erfinder: Reinisch, David, 96047 Bamberg (DE); Schmid, Bernhard, 91058 Erlangen (DE); Martic, Nemanja, 91058 Erlangen (DE)

(57) **Zusammenfassung**

Die Erfindung betrifft einen Elektrolyseur und ein Verfahren zur elektrochemischen Nutzung von Kohlenstoffdioxid. Der Elektrolyseur umfasst wenigstens eine Elektrolysezelle. Die Elektrolysezelle umfasst einen Anodenraum mit einer Anode und einen Kathodenraum mit einer Kathode. Zwischen dem Anodenraum und dem Kathodenraum ist eine erste Membran angeordnet ist. Zwischen der ersten Membran und der Kathode ist eine ein Anionen-selektives Polymer umfassende hydrophobe poröse Schicht angeordnet, wobei die Schicht die Kathode teilweise bedeckt. Kohlenstoffdioxid wird als Edukt zur Kathode geführt. Dort wird das Kohlenstoffdioxid zu wenigstens einem Produkt an der Kathode im Kathodenraum umgesetzt. Es bildet sich Carbonat und/oder Hydrogencarbonat aus nicht umgesetztem Kohlenstoffdioxid und Hydroxidionen an der Kathode. Das Carbonat und das Hydrogencarbonat wird durch die hydrophobe Schicht in den flüssigen Katholyt geführt. Die Protonen aus dem Katholyt reagieren mit dem Carbonat oder Hydrogencarbonat zu Kohlenstoffdioxid und Wasser. Das Kohlenstoffdioxid wird aus dem Katholyt als Edukt durch die hydrophobe Schicht an die Kathode geführt.

## Beschreibung

Die Erfindung betrifft ein Verfahren und einen Elektrolyseur zur elektrochemischen Nutzung von Kohlenstoffdioxid.

Die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, die insbesondere als Plattformchemikalien, insbesondere Methan, Ethan, Ethen, oder Synthesegas, welches Kohlenstoffmonoxid und Wasserstoff umfasst, dienen können. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Aber auch die Elektrolyse von Kohlenstoffdioxid zu Wertstoffen, insbesondere zu Kohlenstoffmonoxid wird seit einigen Jahren erforscht und es gibt Bemühungen, ein elektrochemisches System zu entwickeln, das eine Kohlenstoffdioxidmenge entsprechend des wirtschaftlichen Interesses reduzieren kann. Aktuell werden ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid in die Atmosphäre pro Jahr verursacht. Kohlenstoffdioxid gehört zu den sogenannten Treibhausgasen, deren negative Auswirkungen auf die Atmosphäre und das Klima diskutiert werden. Eine Verwertung dieses Kohlenstoffdioxids ist daher wünschenswert.

Eine vorteilhafte Bauform einer Elektrolyseeinheit ist ein Niedertemperatur-Elektrolyseur bei dem als Eduktgas Kohlenstoffdioxid mit Hilfe einer Gasdiffusionselektrode in einem Kathodenraum umgesetzt wird. An einer Kathode der elektrochemischen Zelle wird das Kohlenstoffdioxid zu Wertprodukten reduziert und an einer Anode wird typischerweise Wasser zu Sauerstoff oxidiert. Aufgrund von Diffusionslimitierungen an der Kathode kann es beim Einsatz eines wässrigen Elektrolyten neben der Bildung von Wertprodukten auch nachteilig zur Bildung von Wasserstoff kommen, da das Wasser des wässrigen Elektrolyten ebenfalls elektrolysiert wird.

Derzeit wird ein mit einem wässrigen Elektrolyt gefüllter Spalt zwischen der protonenleitenden Membran und der Kathode angeordnet. Als Elektrolyt kann jedoch kein reines Wasser verwendet werden, da die Leitfähigkeit des Wassers zu gering wäre und einen nachteilig hohen Spannungsabfall im Spalt zur Folge hätte. Auch das Einsetzen einer Mineralsäure, insbesondere von verdünnter Schwefelsäure, führt zur unerwünschten Wasserstoffbildung da diese Säuren die Protonenkonzentration an der Kathode nachteilig erhöhen.

Im Stand der Technik wird daher häufig die Leitfähigkeit des Elektrolyten innerhalb des Spalts erhöht, in dem eine Base oder ein Leitsalz zugegeben wird. Nachteilig können sich Hydroxidionen bei der Reduktion von Kohlenstoffdioxid an der Kathode bilden. Diese bilden mit weiterem Kohlenstoffdioxid Hydrogencarbonat oder Carbonat. Zusammen mit den Kationen der Base oder den Kationen des Leitsalzes führt dies nachteilig zu schwer löslichen Substanzen, die als Feststoff innerhalb der Elektrolysezelle ausfallen. Insbesondere können das Carbonat oder das Hydrogencarbonat innerhalb einer Gasdiffusionselektrode vorliegen. Dort können nachteilig Salze auskristallisieren, die die Poren der Gasdiffusionselektrode nachteilig verschließen. Dies führt nachteilig zu einer verkürzten Lebensdauer der Elektrolysezelle.

Hydrogencarbonate und Carbonate können aber auch mit Protonen wiederum zu Wasser und Kohlenstoffdioxid reagieren. Dieses Kohlenstoffdioxid wird, je nach Aufbau der Elektrolysezelle, im Elektrolyten, an einer Membran-Kontaktfläche oder direkt an der Anode freigesetzt. Wird das Kohlenstoffdioxid im Elektrolyten oder an einer Membran-Kontaktfläche freigesetzt, so kommt es zur Freisetzung von Gasblasen in einem ionischen Strompfad, was zu einer stark erhöhten Zellspannung führt. Das wiederum hat nachteilig eine niedrige Energieeffizienz zur Folge. Wird das Kohlenstoffdioxid an der Anode freigesetzt, so entsteht ein Gemisch umfassend Kohlenstoffdioxid und Sauerstoff. Nachteilig gibt es für solch ein Gemisch derzeit keine direkte Einsatzmöglichkeit. Eine Auftrennung wäre nachteilig kostspielig.

Es ist daher Aufgabe der Erfindung einen Elektrolyseur und ein Verfahren zum Betreiben eines Elektrolyseures zum elektrochemischen Umsetzen von Kohlenstoffdioxid anzugeben, welches eine hohe Effizienz und Ausbeute bei niedriger Wasserstoffproduktion ermöglicht.

Die Aufgabe wird mit einem Elektrolyseur gemäß Anspruch 1 und einem Verfahren gemäß Anspruch 11 gelöst.

Ein erfindungsgemäßer Elektrolyseur zur elektrochemischen Nutzung von Kohlenstoffdioxid umfasst wenigstens eine Elektrolysezelle. Die Elektrolysezelle umfasst eine Anode und eine Kathode. Zwischen der Anode und der Kathode ist eine Anionen-selektives Polymer umfassende hydrophobe Schicht angeordnet, wobei die Schicht die Kathode teilweise bedeckt.

Das erfindungsgemäße Verfahren zum Betreiben eines Elektrolyseurs zur elektrochemischen Nutzung von Kohlenstoffdioxid umfasst zunächst das Bereitstellen eines Elektrolyseurs mit einer Elektrolysezelle. Die Elektrolysezelle umfasst eine Anode und eine Kathode. Zwischen der Anode und der Kathode ist eine ein Anionen-selektives Polymer umfassende hydrophobe Schicht angeordnet. Die Schicht bedeckt die Kathode teilweise. Ein Kathodenraum ist mit einem flüssigen Katholyt gefüllt. Das Kohlenstoffdioxid wird als Edukt zur Kathode geführt. An der Kathode im Kathodenraum wird das Kohlenstoffdioxid zu wenigstens einem Produkt zerlegt. An der Kathode wird aus nicht umgesetztem Kohlenstoffdioxid und Hydroxidionen Carbonat und/oder Hydrogencarbonat gebildet. Das Carbonat und/oder das Hydrogencarbonat wird durch die hydrophobe Schicht geführt. Das Carbonat und/oder Hydrogencarbonat reagiert in dem Katholyt mit Protonen aus dem Katholyt zu Kohlenstoffdioxid und Wasser. Das Kohlenstoffdioxid wird aus dem Katholyt wiederum als Edukt durch die hydrophobe Schicht an die Kathode geführt. Dort kann das Kohlenstoffdioxid wiederum zu wenigstens einem Produkt umgesetzt werden.

Vorteilhaft führt das Anionen-selektive Polymer der ersten Schicht dazu, Kationen auszuschließen und lediglich Anionen passieren zu lassen. Dies wird durch immobilisierte positiv geladene Ionen realisiert. Typischerweise werden quartäre Amine NR₄⁺ immobilisiert. Die Gesamtladung der Anionenselektiven Schicht wird durch mobile Anionen ausgeglichen, die in der wässrigen Phase der Elektrolysezelle gelöst sind, insbesondere Hydroxidionen aber auch Hydrogencarbonationen.

Vorteilhaft wird durch die Anionen-selektive Schicht verhindert, dass insbesondere Wasserstoffprotonen an die Kathode gelangen. Die unerwünschte Bildung von Wasserstoff wird so vorteilhaft vermieden. Weiterhin ist die Wahl des Kathodenmaterials flexibel möglich da die Anionen-selektive Schicht bereits Wasserstoffprotonen davon abhält, direkt zur Kathode zu gelangen. Vorteilhaft kann damit das Kathodenmaterial in Abhängigkeit des gewünschten Wertproduktes gewählt werden.

Mit der erfindungsgemäßen Vorrichtung und dem erfindungsgemäßen Verfahren ist es vorteilhaft möglich, das Kohlenstoffdioxid, welches zu Carbonat oder Hydrogencarbonat umgesetzt wurde, wiederum mittels Umsetzens von Protonen und Carbonat oder Hydrogencarbonat zu Kohlenstoffdioxid zurückzuwandeln. Dies geschieht im Katholyt direkt oder in Katholyt, der in die Anion-selektive Schicht, insbesondere in deren Poren, eingedrungen ist.

Vorteilhaft wird das entstehende gasförmige Kohlenstoffdioxid aufgrund der hydrophoben Eigenschaften der ersten Schicht in die Poren geführt, von wo es zur Kathode strömt. In anderen Worten sind die Poren derart durchgängig, dass das Kohlenstoffdioxid durch die erste Schicht strömen kann. An der Kathode kann das Kohlenstoffdioxid dann vorteilhaft wiederum reagieren. Vorteilhaft wird dadurch die Ausbeute an Produkt aus Kohlenstoffdioxid erhöht, was die Betriebskosten des Kohlenstoffdioxid-Elektrolyseurs niedrig hält. In anderen Worten ist es vorteilhaft möglich, den Kohlenstoffdioxid-Elektrolyseur effizient zu betreiben, wobei vermieden wird, dass unerwünschter Wasserstoff oder Kohlenstoffdioxid-Sauerstoff-Gemische aus dem Kohlenstoffdioxid-Elektrolyse herausgeführt werden. Vorteilhaft kann somit nahezu reines Anodengas Sauerstoff aus dem Kohlenstoffdioxid-Elektrolyse geführt werden.

In einer vorteilhaften Ausgestaltung und Weiterbildung der Erfindung umfasst die Elektrolysezelle einen Anodenraum mit der Anode und einen Kathodenraum mit der Kathode. Zwischen dem Anodenraum und dem Kathodenraum ist ein Separator, insbesondere ein Diaphragma oder eine erste Membran angeordnet. Die Anionen-selektive hydrophobe Schicht ist dann zwischen dem Separator und der Kathode angeordnet.

In einer vorteilhaften Ausgestaltung und Weiterbildung der Erfindung ist die Kathode als eine Gasdiffusionselektrode ausgestaltet. Auf die Gasdiffusionselektrode ist die hydrophobe Schicht, welche das Anionen-selektive Polymer umfasst, aufgebracht. Vorteilhaft ist es mittels einer Gasdiffusionselektrode möglich, das gasförmige Produkt mit dem flüssigen Katholyt direkt an der Katalysatoroberfläche zusammenzuführen, so dass ein Tripel-Punkt aus dem festen Katalysator, dem flüssigen Elektrolyt und dem gasförmigen Kohlenstoffdioxid vorliegt. Vorteilhaft ermöglicht der Einsatz einer Gasdiffusionselektrode höhere Stromdichten und Umsatzraten. Somit wird vorteilhaft auch eine hohe Effizienz in dem Kohlenstoffdioxid-Elektrolyseur erreicht.

In einer weiteren vorteilhaften Ausgestaltung und Weiterbildung der Erfindung ist die Kathode als eine Gasdiffusionsschicht mit einer Katalysatorschicht ausgestaltet. Die Kathode umfasst also eine Gasdiffusionsschicht, welche mit einem geeigneten Katalysator beschichtet wird. Auf die Katalysatorschicht wird wiederum die hydrophobe poröse Schicht aufgebracht, die das Anionen- selektive Polymer umfasst. Vorteilhaft benötigt dieser Aufbau weniger Katalysatormasse als der Aufbau einer klassischen Gasdiffusionselektrode. Insbesondere beim Einsatz von teuren Katalysatormaterialien ist dies vorteilhaft kostengünstiger.

In einer weiteren vorteilhaften Ausgestaltung und Weiterbildung der Erfindung umfasst die Kathode eine zweite Membran. Die zweite Membran umfasst wiederum die hydrophobe Schicht, die ein Anionen-selektives Polymer umfasst. Die Kathode umfasst weiterhin eine Katalysatorschicht. In diesem Beispiel wird zunächst eine Membran erzeugt, welche hydrophobe poröse Anionen-selektive Eigenschaften aufweist. Auf diese Membran wird eine Katalysatorschicht aufgebracht. Vorteilhaft benötigt dieser Aufbau weniger Katalysatormasse als der Aufbau einer klassischen Gasdiffusionselektrode. Insbesondere beim Einsatz von teuren Katalysatormaterialien ist dies vorteilhaft kostengünstiger.

In einer weiteren vorteilhaften Ausgestaltung und Weiterbildung der Erfindung umfasst die Kathode wenigstens eins der Elemente Silber, Kupfer, Blei, Indium, Zinn oder Zink. Die Auswahl des Kathodenmaterials ermöglicht vorteilhaft eine Auswahl der entstehenden Wertprodukte in der Elektrolysezelle. Insbesondere kann beim Einsatz einer Silberkathode Kohlenstoffmonoxid hergestellt werden, beim Einsatz einer Kupferkathode Ethylen und bei Einsatz einer Bleikathode Ameisensäure.

In einer weiteren vorteilhaften Ausgestaltung und Weiterbildung der Erfindung ist die erste Membran Kationen-selektiv ausgestaltet. Vorteilhaft erlaubt dies den Transport von Protonen über die erste Membran hinweg. Dies ermöglicht es, den Katholyt in einem sauren pH-Bereich zu halten. Besonders bevorzugt liegt in dem Anodenraum ein Anolyt, also ein flüssiger Elektrolyt, vor. An der Anode wird Wasser zu Protonen und Sauerstoff zerlegt. Die Protonen passieren dann die erste Kationen-selektive Membran.

In einer weiteren vollhaften Ausgestaltung und Weiterbildung der Erfindung liegt in dem Kathodenraum ein flüssiger Elektrolyt vor. In anderen Worten liegt ein flüssiger Katholyt vor. Der Einsatz eines flüssigen Katholyts ist insbesondere sinnvoll, wenn zwischen der hydrophoben Schicht und der ersten Membran ein Spalt vorliegt. In anderen Worten ist dies der Fall, wenn zwischen der hydrophoben Schicht und der ersten Membran ein Kathodenteilraum vorhanden ist. Die Leitfähigkeit in dem Kathodenteilraum wird dann durch den Einsatz eines elektrolythaltigen Katholyts erhöht. Vorteilhaft erhöht dies die Effizienz der Elektrolysezelle.

Typischerweise liegt auch in dem Anodenraum ein flüssiger Elektrolyt vor, wenn zwischen der Anode und der ersten Membran ein Anodenteilraum vorhanden ist, also ein Spalt dazwischen liegt. Dieser wird Anolyt genannt. Der Katholyt und der Anolyt können von unterschiedlicher oder gleicher Zusammensetzung sein.

Alternativ ist ebenfalls denkbar, dass die hydrophobe Schicht direkt an die erste Membran grenzt. In anderen Worten ist dann kein Spalt zwischen der hydrophoben Schicht und der ersten Membran vorhanden. Auf die erste Membran wiederum kann direkt die Anode aufgebracht sein. Eine derartige Elektrolysezelle ohne einen Spalt kann mit reinem Wasser betrieben werden. Ein flüssiger Elektrolyt ist hier nicht notwendig. Das Hydrogencarbonat und/oder das Carbonat kann direkt mit Protonen, die die erste Membran passieren, zu Kohlenstoffdioxid reagieren.

In einer weiteren vorteilhaften Ausgestaltung und Weiterbildung der Erfindung weist der flüssige Elektrolyt, in anderen Worten der Katholyt, einen pH-Wert von weniger als, besonders bevorzugt einen pH-Wert von 3 oder weniger als 3 auf. In anderen Worten liegt der pH-Wert des Katholyts im sauren Bereich. Somit liegen ausreichend Protonen im Katholyt vor, um eine Reaktion des Hydrogencarbonats und/oder des Carbonats zu Kohlenstoffdioxid und Wasser umzusetzen. Weiterhin ist der erreichte Umsatz vorteilhaft so hoch, dass das Kohlenstoffdioxid an der Kathode wiederum zu dem gewünschten Wertprodukt umgesetzt werden kann.

In einer weiteren vorteilhaften Ausgestaltung und Weiterbildung der Erfindung wird als Produkt wenigstens ein Produkt aus der Gruppe Kohlenstoffmonoxid, Ethylen oder Ameisensäure hergestellt. Insbesondere Kohlenstoffmonoxid kann vorteilhaft als Plattformchemikalie für weitere Reaktionen dienen oder, zusammen mit Wasserstoff, zu Synthesegas gemischt werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Elektrolysezelle mit einer Gasdiffusionselektrode und einer ersten hydrophoben Schicht,
- Figur 2: eine Kathode einer Elektrolysezelle umfassend eine Gasdiffusionselektrode und eine erste hydrophobe Schicht,
- Figur 3: eine Kathode einer Elektrolysezelle mit einer Gasdiffusionsschicht, einer Katalysatorschicht und einer hydrophoben Schicht,
- Figur 4: eine Kathode einer Elektrolysezelle mit einer Kathalysatorschicht und einer ersten hydrophoben Schicht.

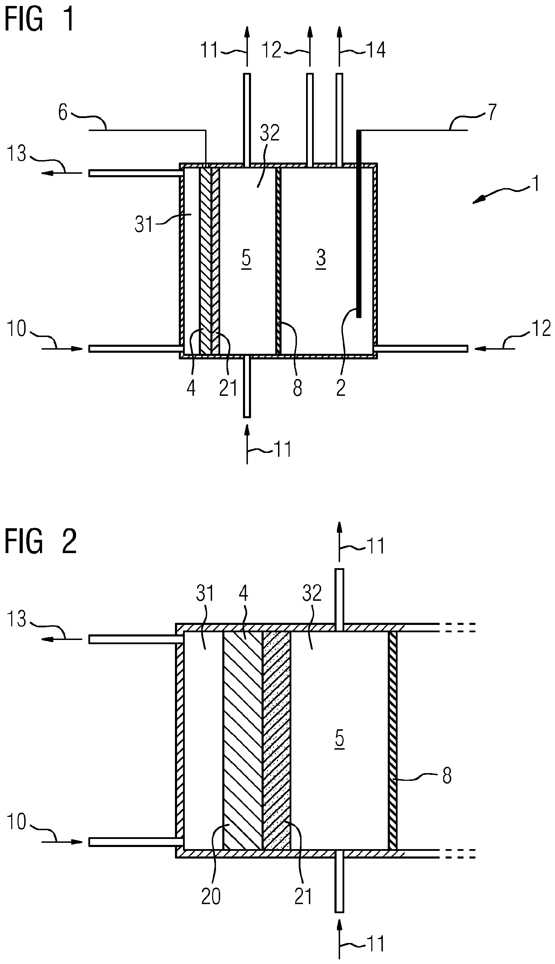

Figur 1 zeigt eine Elektrolysezelle 1 mit einem Kathodenraum 5, mit einer Kathode 4, mit einem Anodenraum 3 und einer Anode 2. Der Kathodenraum 5 und der Anodenraum 3 sind mittels einer ersten Membran 8 voneinander getrennt. Die Kathode 4 ist mittels einer ersten elektrischen Anbindung 6 elektrisch angebunden. Die Anode 2 ist mit einer zweiten elektrischen Anbindung 7 elektrisch angebunden. Typischerweise werden mehrere Elektrolysezellen zu einem Elektrolysestack zusammen geschalten. Dabei werden die Elektrolysezellen elektrisch in Reihe und stofflich parallel geschalten.

Während der Elektrolyse in der Elektrolysezelle 1 wird Kohlenstoffdioxid 10 oder ein Kohlenstoffdioxid umfassendes Gas in den Kathodenraum 5 geführt. An der Kathode 4, in diesem Ausführungsbeispiel eine Gasdiffusionselektrode, wird das Kohlenstoffdioxid 10 zu einem Produkt reduziert. Das Produkt ist in diesem Beispiel Kohlenmonoxid. Es wird in einem ersten Kathodenteilraum 31 umgesetzt und verlässt diesen als Produktgas 13 über eine Leitung. Es ist aber ebenso denkbar, dass das Kohlenstoffdioxid zu weiteren Wertprodukten, insbesondere Ethen, Ethin, Ameisensäure, Formiat, Methan, Methanol, Ethan, Ethanol, Acetaldehyd, Essigsäure, Acetat, Propan, Propen, Propadien, Propin, Propionaldehyd, Glycolaldehyd, Allyalkohol, Aceton, Propanol, Propionsäure, Propionat, Butan, Butanol, Buten, Butin, Buttersäure, Butyrat, Ethylenglykol, Hydroxyaceton, Glyoxal, Oxalsäure oder Butyraldehyd umgesetzt wird. Das Produktgas 13, umfassend insbesondere Kohlenmonoxid, wird aus dem Kathodenraum 5 herausgeführt.

In einen zweiten Kathodenteilraum 32 wird ein Elektrolyt als Katholyt 11 geführt. Der Elektrolyt ist flüssig und umfasst wenigstens ein Salz. In diesem Beispiel wird in den zweiten Kathodenteilraum 32 und dem Anodenraum 3 derselbe Elektrolyt geführt. In den Anodenraum 3 wird der Elektrolyt als Anolyt 12 geführt. Vorteilhaft können der Katholyt 11 und der Anolyt 12, nachdem sie die Elektrolysezelle 1 verlassen haben, in einen gemeinsamen Behälter geführt werden und regeneriert werden. Es ist alternativ ebenso möglich, dass sich der Katholyt und der Anolyt in ihrer Zusammensetzung unterscheiden.

Figur 2 zeigt die Kathode 4 des ersten Ausführungsbeispiels im Detail. Die Kathode 4 umfasst eine Gasdiffusionselektrode 20. Die Gasdiffusionselektrode 20 trennt den Kathodenraum 5 in einen ersten Kathodenteilraum 31 und einen zweiten Kathodenteilraum 32. Auf die Gasdiffusionselektrode ist eine erste hydrophobe Schicht 21 aufgebracht. Dabei ist die hydrophobe Schicht 21 zur ersten Membran 8 gerichtet. Die Gasdiffusionselektrode 20 ist in Richtung der Eduktgaszufuhr, in diesem Beispiel Kohlenstoffdioxidzufuhr 10, ausgerichtet.

Das gasförmige Kohlenstoffdioxid 10 wird an der Gasdiffusionselektrode zusammen mit Wasser aus dem Elektrolyten an einem Katalysator der Gasdiffusionselektrode gemäß Gleichung 1 umgesetzt:

CO₂ + 2e⁻ + H₂O → CO + 2 OH⁻ Gleichung 1

Weiterhin kann das Kohlenstoffdioxid 10 mit den während der Elektrolyse gemäß Gleichung 1 erzeugten Ladungsträgern, den Hydroxidionen, reagieren. Das Kohlenstoffdioxid wird demnach chemisch in dem Elektrolyten als Hydrogencarbonat und/oder Carbonat gebunden. Die Gleichung 2 und Gleichung 3 beschreiben diese Reaktionen.

CO₂ + OH⁻ → HCO₃⁻ Gleichung 2

CO₂ + 2 OH⁻ → CO₃2⁻ + H₂O Gleichung 3

Diese Carbonate und/oder Hydrogencarbonate werden durch die hydrophobe ionenleitendende erste Schicht 21 von der Kathode 4 in den Katholyt 11 geführt. Aufgrund der sauren Umgebung im Katholyt 11 reagieren die Carbonate und/oder Hydrogencarbonate mit den Protonen gemäß Gleichung 4 und Gleichung 5 zu Wasser und Kohlenstoffdioxid 10. Diese Reaktion findet räumlich in der Nähe der Grenzfläche zur ersten hydrophoben Schicht 21 statt.

HCO₃⁻ + H⁺ → H₂O + CO₂ Gleichung 4

CO₃2⁻ + 2H⁺ → H₂O + CO₂ Gleichung 5

Das gemäß Gleichung 4 und Gleichung 5 entstehende Kohlenstoffdioxid wird in die hydrophobe erste Schicht 21 aufgenommen, bzw. aufgesogen. Diese Aufnahme ist derart bevorzugt, da Kohlenstoffdioxid 10 hydrophob ist. Das Kohlenstoffdioxid 10 wird hin zur Gasdiffusionselektrode 20 geführt. Vorteilhaft kann das Kohlenstoffdioxid 10 an der Gasdiffusionselektrode 20 wiederum als Edukt gemäß Gleichung 1 zu Kohlenstoffmonoxid umgesetzt werden. Vorteilhaft werden somit die Effizienz und Ausbeute des Kohlenstoffdioxid-Elektrolyseurs verbessert. Weiterhin kann vorteilhaft auf weitere Aufbereitungsschritte des Kohlenstoffdioxids verzichtet werden.

An der Anode 2 erfolgt gemäß Gleichung 6 das Umsetzen von Wasser zu Sauerstoff und Protonen. Die Protonen können vorteilhaft durch die erste Membran 8, welche Kationen-selektive Eigenschaften aufweist, permeiren.

H₂O → 2e⁻ + 2H⁺ + ½ O₂ Gleichung 6

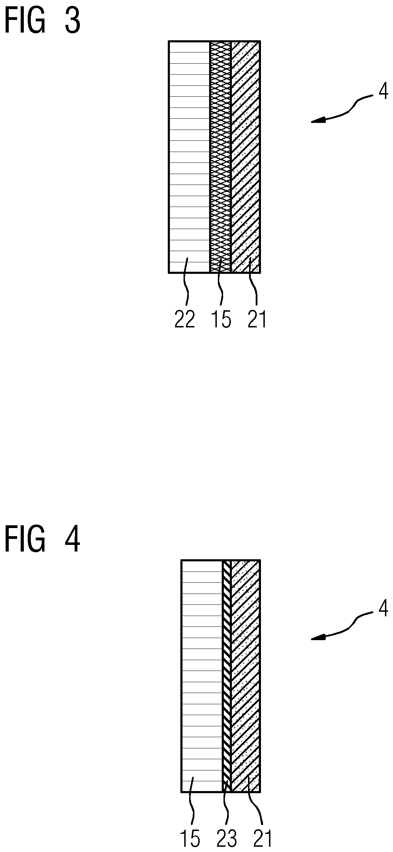

Figur 3 zeigt einen alternativen Aufbau einer Kathode 4 mit einer hydrophoben Schicht 21, wie sie in der Elektrolysezelle 1 eingesetzt werden kann. In diesem Ausführungsbeispiel umfasst die Kathode 4 eine Gasdiffusionsschicht 22. Darauf aufgebracht ist eine erste hydrophobe Schicht 21. Zwischen der hydrophoben Schicht 21 und der Gasdiffusionsschicht 22 ist ein Katalysator 15 angeordnet. Analog zum ersten Ausführungsbeispiel können Carbonate und/oder Hydrogencarbonate somit in den Katholyt 11 gelangen, wo sie wiederum zu Kohlenstoffdioxid 10 reagieren und durch die erste hydrophob Schicht 21 zurück an den Katalysator 15 geführt werden. Dort können sie vorteilhaft wiederum gemäß Gleichung 1 zu Kohlenstoffmonoxid umgesetzt werden.

Figur 4 zeigt einen weiteren alternativen Aufbau einer Kathode 4 mit einer ersten hydrophoben Schicht 21. In diesem Beispiel umfasst die Kathode 4 eine poröse ionenleitende hydrophobe Membran 23. Auf diese Membran 23 ist auf der einen Seite eine erste Schicht 21 und auf der anderen, gegenüberliegenden Seite ein geeigneter Katalysator 15 aufgetragen. Dieser Aufbau wird auch Membran-Elektroden-Aufbau, engl. "membrane electrode assembly" MEA, genannt. Wiederum analog zu den vorherigen Ausführungsbeispielen kann Carbonat und/oder Hydrogencarbonat, welches in dem Katholyt 11 wiederum zu Kohlenstoffdioxid 10 reagiert, zurück an die Katalysatorschicht 15 geführt werden. Dort kann das Kohlenstoffdioxid 10 wiederum gemäß Gleichung 1 zu Kohlenstoffmonoxid reagieren.

### Bezugszeichenliste

- 1: Elektrolyseur
- 2: Anode
- 3: Anodenraum
- 4: Kathode
- 5: Kathodenraum
- 6: erste elektrische Anbindung
- 7: zweite elektrische Anbindung
- 8: erste Membran
- 10: Kohlenstoffdioxid
- 11: Katholyt
- 12: Anolyt
- 13: Produkt
- 14: Sauerstoff
- 15: Katalysator
- 20: Gasdiffusionselektrode
- 21: hydrophobe Schicht
- 22: Gasdiffusionsschicht
- 23: zweite Membran

## Patentansprüche

1. Elektrolyseur zur elektrochemischen Nutzung von Kohlenstoffdioxid umfassend wenigstens eine Elektrolysezelle (1),
- wobei die Elektrolysezelle (1) eine Anode (2) und eine Kathode (4) umfasst,
- wobei zwischen der Anode (2) und der Kathode (4) eine ein Anionen-selektives Polymer umfassende hydrophobe poröse Schicht (21) angeordnet ist und wobei die Schicht (21) die Kathode (4) teilweise bedeckt.

2. Elektrolyseur nach Anspruch 1, wobei die Anode (2) in einem Anodenraum (3) und die Kathode (4) in einem Kathodenraum (5) angeordnet ist, wobei zwischen dem Anodenraum (3) und dem Kathodenraum (5) ein Separator (8) angeordnet ist,

3. Elektrolyseur nach Anspruch 1, wobei die Kathode (4) eine Gasdiffusionselektrode (20) umfasst.

4. Elektrolyseur nach Anspruch 1 oder 2, wobei die Kathode (4) eine Gasdiffusionsschicht (22) und eine Katalysatorschicht (15) umfasst.

5. Elektrolyseur nach Anspruch einem der Ansprüche 1 oder 2, wobei die Kathode (4) eine Katalysatorschicht (15) und eine zweite Membran (23) umfasst, wobei die zweite Membran (23) die ein Anionen-selektives Polymer umfassende hydrophobe Schicht (21) umfasst.

6. Elektrolyseur nach einem der vorhergehenden Ansprüche, wobei die Kathode (4) wenigstens eins der Elemente Silber, Kupfer, Blei, Indium, Zinn, Gold oder Zink umfasst.

7. Elektrolyseur nach einem der vorhergehenden Ansprüche, wobei der Separator (8) eine erste Membran ist, die Kationen-selektiv ist.

8. Elektrolyseur nach einem der vorhergehenden Ansprüche, wobei in dem Kathodenraum (5) ein flüssiger Elektrolyt (11) vorliegt.

9. Elektrolyseur nach Anspruch 8, wobei der flüssige Elektrolyt (11) einen pH-Wert von weniger als 7 aufweist.

10. Elektrolyseur nach einem der Ansprüche 8 oder 9, wobei der flüssige Elektrolyt (11) einen pH-Wert von 3 oder weniger als 3 aufweist.

11. Verfahren zum Betreiben eines Elektrolyseurs zur elektrochemischen Nutzung von Kohlenstoffdioxid (10) mit folgenden Schritten:
- Bereitstellen eines Elektrolyseurs mit einer Elektrolysezelle (1), wobei die Elektrolysezelle (1) eine Anode (2) und eine Kathode (4) umfasst, wobei zwischen der Anode (2) und der Kathode (4) eine ein Anionen-selektives Polymer umfassende hydrophobe poröse Schicht (21) angeordnet ist und wobei die Schicht (21) die Kathode (4) teilweise bedeckt, wobei ein Kathodenraum (5) mit einem flüssigen Katholyt (11) gefüllt ist,
- Zuführen von Kohlenstoffdioxid (10) als Edukt zur Kathode (4),
- Zerlegen von Kohlenstoffdioxid (10) zu wenigstens einem Produkt an der Kathode (4) im Kathodenraum (5), wobei Carbonat und/oder Hydrogencarbonat aus nicht umgesetztem Kohlenstoffdioxid (10) und Hydroxidionen an der Kathode (4) gebildet wird,
- Führen des Carbonats und Hydrogencarbonats durch die hydrophobe Schicht (21),
- Reagieren von Protonen aus dem Katholyt (11) mit dem Carbonat und/oder Hydrogencarbonat zu Kohlenstoffdioxid (10) und Wasser,
- Führen des Kohlenstoffdioxids aus dem Katholyt (11) als Edukt durch die hydrophobe Schicht (21) an die Kathode (4).

12. Verfahren nach Anspruch 11, wobei in dem Katholyt (11) ein saurer pH-Wert herrscht.

13. Verfahren nach Anspruch 11 oder 12, wobei in dem Katholyt (11) ein pH-Wert von weniger als 3 herrscht.

14. Verfahren nach einem der Ansprüche 11 bis 13, wobei in dem Anodenraum (3) ein Anolyt (12) vorliegt und an der Anode (2) der Anolyt (12) zu Protonen und Sauerstoff (14) zerlegt wird, wobei die Protonen die erste Membran (8) passieren und einen sauren pH-Wert des Katholyts (11) einstellen.

15. Verfahren nach einem der Ansprüche 11 bis 14, wobei als Produkt wenigstens ein Produkt aus der Gruppe Kohlenstoffmonoxid, Ethen, Ameisensäure, Formiat, Methan, Methanol, Ethan, Ethin, Ethanol, Acetaldehyd, Essigsäure, Acetat, Propan, Propen, Propadien, Propin, Propionaldehyd, Glycolaldehyd, Allyalkohol, Aceton, Propanol, Propionsäure, Propionat, Butan, Butanol, Buten, Butin, Buttersäure, Butyrat, Ethylenglykol, Hydroxyaceton, Glyoxal, Oxalsäure oder Butyraldehyd hergestellt wird.
